(19) Europäisches Patentamt
European Patent Office
Office européen des brevets

(11) Veröffentlichungsnummer: **0 043 482**
**B1**

(12) # EUROPÄISCHE PATENTSCHRIFT

(45) Veröffentlichungstag der Patentschrift: **25.05.83**

(51) Int. Cl.³: **C 07 F 9/40** // C07F9/53, C07F9/32

(21) Anmeldenummer: **81104779.4**

(22) Anmeldetag: **22.06.81**

(54) **Verfahren zur Herstellung von Arylphosphonyl-Verbindungen.**

(30) Priorität: **04.07.80 DE 3025377**

(43) Veröffentlichungstag der Anmeldung: **13.01.82 Patentblatt 82/2**

(45) Bekanntmachung des Hinweises auf die Patenterteilung: **25.05.83 Patentblatt 83/21**

(84) Benannte Vertragsstaaten: **BE CH DE FR GB IT LI NL**

(56) Entgegenhaltungen:
**De-A-1 810 431**
**DE-A-2 442 428**
**US-A-4 113 807**

(73) Patentinhaber: **BAYER AG, Zentralbereich Patente, Marken und Lizenzen, D-5090 Leverkusen 1, Bayerwerk (DE)**

(72) Erfinder: **Block, Hans-Dieter, Dr., Roggendorfstrasse 65, D-5000 Köln 80 (DE)**
Erfinder: **Dahmen, Hans, Semmelweisstrasse 32, D-5000 Köln 80 (DE)**

EP 0 043 482 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Arylphosphonyl-Verbindungen

Die vorliegende Erfindung betrifft ein neues Verfahren zur Herstellung von Arylphosphonyl-Verbindungen durch katalytische Umlagerung von Aryloxyphosphinen in Gegenwart von Bromaromaten und nullwertigem Nickel.

Die erfindungsgemäße Reaktion läßt sich durch folgende allgemeine Gleichung darstellen:

Gl. 1

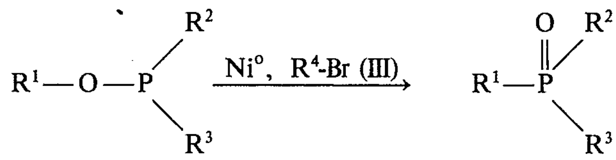


I II

worin I das als Ausgangsmaterial eingesetzte Aryloxyphosphin und II die als Produkt der erfindungsgemäßen Reaktion erhaltene Arylphosphonyl-Verbindung darstellen und worin die angeführten Substituenten folgende Bedeutung haben:

$R^1$ steht für einen ein- oder mehrkernigen $C_6-C_{14}$-Arylrest, der durch Chlor, Fluor oder durch Alkyl-, Aryl-, Alkoxy-, Arylkoxy-, Alkenyl- oder Cyan-Reste substituiert sein kann,
$R^2$ und $R^3$ stehen unabhängig voneinander für einen Alkyl-, Alkenyl- oder Arylrest oder für einen Rest der Struktur $-O-R^5$, in dem $R^5$ unabhängig von $R^1$ die gleiche Bedeutung hat wie $R^1$,
$R^4$ hat unabhängig von $R^1$ die gleiche Bedeutung wie $R^1$, ist vorzugsweise mit $R^1$ identisch.

Detaillierter ausgeführt umfaßt das erfindungsgemäße Verfahren also die Synthese von Arylphosphonsäurediarylestern aus Triarylphosphiten sowie die Synthese von Aryl-hydrocarbyl-phosphinsäurearylestern aus Hydrocarbylphosphonigsäurediarylestern und schließlich die Synthese von Di-hydrocarbyl-aryl-phosphinoxiden aus Di-hydrocarbyl-phosphinigsäurearylestern, wobei unter Hydrocarbylresten sowohl Alkyl- und Alkenyl- wie auch Arylreste zu verstehen sind.

Ein besonders bevorzugter Gegenstand der vorliegenden Erfindung ist das Verfahren zur Herstellung von Benzolphosphonsäurediphenylester durch katalytische Umlagerung von Triphenylphosphit in Gegenwart von Brombenzol und nullwertigem Nickel.

Arylphosphonsäurediarylester, Aryl-hydrocarbyl-phosphinsäurearylester und Di-hydrocarbyl-arylphosphinoxide sind bekannte Substanzen, die sich nach verschiedenen Verfahren herstellen lassen. Die klassische Synthese der Arylphosphonsäurediarylester besteht in der Umsetzung der Arylphosphonsäuredichloride mit Phenolen, wobei die schwierige Synthese des Arylphosphonsäuredichlorids ein gravierender Nachteil dieses Verfahrens ist.

In entsprechender Weise sind die Hydrocarbyl-arylphosphinsäurearylester aus den zugehörigen Hydrocarbyl-aryl-phosphinsäurechloriden durch Umsetzung mit Phenolen herstellbar, auch hier besteht die wesentliche Schwierigkeit in der Darstellung der entsprechenden Phosphinsäurechloride.

Es hat daher nicht an Versuchen gefehlt, die klassische Michaelis-Arbusow-Reaktion, die Alkylphosphonyl-Verbindungen durch katalytische Umlagerung aus Alkoxyphosphinen — also Trialkylphosphiten, Dialkyl-hydrocarbylphosphoniten, Alkyldihydrocarbylphosphiniten — in Gegenwart von Halogenalkanen herzustellen gestattet, dahingehend zu modifizieren, daß Arylphosphonyl-Verbindungen herstellstellbar werden. In ganz besonderem Maße haben diese Bemühungen dem Benzolphosphonsäurediphenylester gegolten.

Eine Reihe von Verfahren, die von Arylhalogeniden ausgehen und diese mit Phosphiten umsetzen, sind auf die Herstellung von Arylphosphonsäuredialkylestern beschränkt (z. B. DE-OS 1 810 431); andere Verfahren, die letztlich immer auf eine klassische Michaelis-Arbusow-Umlagerung von Alkoxyphosphino-Gruppen (vgl. z. B. 1) M. L. Honig, E. D. Weil, J. Org. Chem. 42, 379 (1977), 2) DE-OS 2 747 554) zurückgehen, liefern nur Alkanphosphonsäure-diarylester. Diese beiden Verfahren tragen also zur Lösung des anstehenden Problems nichts bei.

In ganz besonderem Maße haben die präparativen Bemühungen um die Entwicklung eines Syntheseweges zur Herstellung von Arylphosphonyl-Verbindungen aus Aryloxyphosphinen insbesondere dem Benzolphosphonsäurediphenylester gegolten und sich auf die katalytische Umlagerung von Triphenylphosphit konzentriert.

Einen ersten, allerdings in vielerlei Hinsicht noch unbefriedigenden Erfolg stellt das in der US-PS 4 113 807 beschriebene Verfahren dar. Zur Durchführung der Reaktion dieses Verfahrens wird Triphenylphosphit mit Jodbenzol und einem Metallhalogenid oder einem Metall-Phosphit-Komplex auf Temperaturen über 200°C erhitzt. Nachteilig ist dabei vor allen Dingen die Verwendung des teueren Jodbenzols in Mengen bis zu 10% und der verhältnismäßig hohe Anteil an Triphenylphosphat im Reaktionsprodukt, wenn Umsätze des Triphenylphosphits über 20% erreicht werden sollen.

Deutlich bessere Ergebnisse werden nach dem erfindungsgemäßen Verfahren erzielt, wenn die

Umlagerung des Triphenylphosphits in Gegenwart des sehr viel besser zugänglichen und wohlfeileren Brombenzols anstelle des Jodbenzols vorgenommen wird, wobei als weiterer Katalysator nullwertiges Nickel anwesend sein muß.

Dieses Ergebnis ist in vielerlei Hinsicht überraschend. In allen bekannten Fällen Michaelis-Arbusowanaloger Reaktionen sind die Jodverbindungen deutlich aktiver als die Bromverbindungen, dagegen ist die gemäße Reaktion viel vorteilhafter mit Brombenzol als mit Jodbenzol auszuführen.

An Versuchen, Jodbenzol bei Michaelis-Arbusow-analogen Umsetzungen durch Brombenzol zu ersetzen, hat es bis jetzt nicht gefehlt (z. B. J. B. Plumb, R. Obrycki, C. E. Griffin, J. Org. Chem. 31, 2455 (1966), diese scheiterten aber, weil es nicht gelang, geeignete Verfahrensbedingungen zu finden.

Mit Brombenzol verläuft das erfindungsgemäße Verfahren nicht nur schneller und vollständiger als mit Jodbenzol, sondern auch mit deutlich weniger Nebenreaktionen, z. B. Triphenylphosphat-Bildung. Reaktionen, die in der Form der Reaktionsgleichung, in der Art eines Ausgangsmaterials oder in der Art des Produktes mit dem erfindungsgemäßen Verfahrens eine gewisse Ähnlichkeit haben, ohne aber auf die der Erfindung zugrunde liegende Reaktion anwendbar zu sein, benötigen entweder energiereiches Licht oder aber Kupfer und seine Verbindungen als Katalysator oder verlaufen unter ganz anderen Bedingungen mit fast beliebigen Metallverbindungen; dagegen ist die erfindungsgemäße Reaktion mit befriedigendem Ergebnis nur mit nullwertigem Nickel als Katalysator durchzuführen.

Das erfindungsgemäße Verfahren ist nicht auf die Umwandlung von Triphenylphosphit in Benzolphosphonsäurediphenylester beschränkt, vielmehr ist seine allgemeine Anwendbarkeit auf viele Aryloxyphosphine, also Triarylphosphite, Phosphonigsäurediarylester und Phosphinigsäurearylester als ein wesentlicher Vorteil dieses Verfahrens anzusehen.

Als Katalysator sind neben dem nullwertigen Nickel bevorzugt die der umgelagerten bzw. umzulagernden Aryloxygruppe entsprechenden Arylbromide einzusetzen.

Für das erfindungsgemäße Verfahren geeignete Aryloxyphosphine der allgemeinen Formel I sind z. B.:

Triphenylphospit,
Tri-p-kresylphospit,
Tri-o,m-kresylphosphit,
Diphenylkresylphosphit,
Tris-p-ethylphenylphosphit,
Tris-o,m,p-ethylphenylphosphit,
Tris-o,m,p-isopropylphenylphosphit,
Diphenyl-p-isopropylphenylphosphit,
Tris-isobutylphenylphosphit,
Tris-p-tert.-butylphenylphosphit,
Tris-nonylphenylphosphit,
Trioctylphenylphosphit,
Diphenyl-dodecylphenylphosphit,
Tri-β-naphthylphosphit,
Tri-α-naphthylphosphit,
Tris-p-phenylphenylphosphit,
Tris-p-chlorphenylphosphit,
Tris-p-fluorphenylphosphit,
Methanphosphonigsäurediphenylester,
Ethanphosphonigsäurediphenylester,
Benzolphosphonigsäurediphenylester,
Methanphosphonigsäure-di-p-kresylester,
Methanphosphonigsäure-phenyl-p-kresylester,
Methanphosphonigsäure-di-p-isopropylphenylester,
Methanphosphonigsäure-di-p-tert.-butylphenylester,
Benzolphosphonigsäure-di-p-ethylphenylester,
Benzolphosphonigsäure-di-p-isopropylphenylester,
Benzolphosphonigsäure-di-p-tert.-butylphenylester,
Dimethylphosphinigsäurephenylester,
Diphenylphosphinigsäurephenylester,
Diphenylphosphinigsäurekresylester.

Das als Katalysator nötige Arylbromid der allgemeinen Formel III wird in Mengen von 0,2 bis 10 Gew.-% — bezogen auf das umzulagernde Aryloxyphosphin — eingesetzt. Höhere Dosen sind möglich, bringen aber keine besonderen Vorteile mehr. Im allgemeinen wird man den Arylrest $R^4$ des einzusetzenden Arylbromids so wählen, daß er mit dem Arylrest $R^1$ der Aryloxygruppe im umzulagernden Aryloxyphosphin übereinstimmt. Wenn man aber eine gewisse Verunreinigung des Produktes in Kauf nimmt, kann auch ein anderes Arylbromid eingesetzt werden.

Als Nickel (0) enthaltende Katalysatoren kommen elementares Nickel, vorzugsweise in aktiver und in

feinverteilter Form, z. B. als Raney-Nickel, sowie Komplexe des Nickel (0) z. B. mit Trialkylphosphiten, Triarylphosphiten, Phosphinig- und Phosphinigsäureestern, Phosphinen, Phosphortrifluorid, Isonitrilen, Aminen, Stickstoffoxid oder mit Kohlenmonooxid und mit ähnlichen Liganden in Frage, weiterhin aber auch solche Nickelverbindungen höherer Oxidationsstufe, die unter den Reaktionsbedingungen in nullwertiges Nickel übergehen, wie z. B. Nickeloxalat. Die erforderlichen Mengen, gerechnet als elementares Nickel, liegen zwischen 0,05 und ca. 10 Gew.-%, bezogen auf das umzulagernde Aryloxyphosphin.

Je nach Reaktionsbedingungen lassen sich unterschiedliche Umwandlungsgrade des jeweiligen Aryloxyphosphins in die Arylphosphonyl-Verbindung erreichen, wobei Reaktionstemperatur, Reaktionsdauer, Katalysator und Katalysator-Konzentration die wichtigsten Einflußgrößen sind.

Das Reaktionsergebnis läßt sich durch Gaschromatographie am einfachsten feststellen. Auch die $^{31}P$-NMR-Spektroskopie sowie die klassischen oxidimetrischen Verfahren zur Bestimmung von Phosphor (III) sind als Analysenmethoden geeignet. Zur Feststellung des Gehaltes an Aryloxyphosphinoxiden, z. B. Triarylphosphat, insbesondere Triphenylphosphat ist die Massenspektrometrie ein bevorzugtes Verfahren.

Um die Aufbereitung des Reaktionsproduktes und die Isolierung der reinen Arylphosphonyl-Verbindung — also z. B. des Benzolphosphonsäurediphenylesters — möglichst einfach zu gestalten, wird natürlich eine praktisch vollständige Umwandlung des Aryloxyphosphins und geringstmögliche Bildung von Aryloxyphosphinoxiden angestrebt.

Bevorzugte Reaktionstemperaturen liegen zwischen 250 und 350° C, besonders bevorzugte zwischen 280 und 330° C. Der optimale Temperaturbereich muß auf das umzulagernde Aryloxyphosphin abgestimmt und jeweils experimentell ermittelt werden. Triphenylphosphit z. B. wird in Benzolphosphonsäurediphenylester vorzugsweise bei Temperaturen zwischen 300 und 330° C umgelagert. Außerhalb des oben angegebenen Bereichs liegende Temperaturen haben zumeist unvollständige Umsetzung des Aryloxyphosphins, also z. B. des Triphenylphosphits, oder eine Zunahme der Nebenreaktionen zur Folge.

Im allgemeinen wird die erfindungsgemäße Reaktion unter Inertgas (wie z. B. Stickstoff, Argon) durchgeführt, Einwirkung von Sauerstoff kann zu partieller Oxidation des Aryloxyphosphins und/oder Nickel (0)-Katalysators führen. Feuchtigkeit sollte nach Möglichkeit ausgeschlossen sein. Es ist auch möglich, die erfindungsgemäße Reaktion nicht nur bei Normaldruck, sondern auch bei erhöhtem oder vermindertem Druck auszuführen. Die Verwendung von Lösungsmitteln bringt keine erkennbaren Vorteile. Die Reaktion kann sowohl ansatzweise wie auch kontinuierlich ausgeführt werden.

Das Reaktionsprodukt kann durch übliche Maßnahmen zu reiner Arylphosphonyl-Verbindung, z. B. reinem Benzolphosphonsäure-diphenylester aufgearbeitet werden, z. B. durch Abdestillieren vom nichtflüchtigen Nickelkatalysator oder mit wesentlich besserem Reinigungsergebnis durch fraktionierte Destillation oder Rektifikation. Auch die fraktionierte Kristallisation kann zur Reinigung herangezogen werden. Die Reinigung des Produktes kann aber auch auf nassem Wege z. B. durch Auswaschen des gegebenenfalls in einem Lösungsmittel gelösten Rohproduktes mit wäßrigen Säuren oder wäßrigen Basen oder auch mit oxidierenden oder reduzierenden Lösungen, gegebenenfalls nacheinander mit den genannten Lösungen, vorgenommen werden. Maßnahmen zur Reinigung des Produktes mit wäßrigen Lösungen können auch mit solchen der destillativen Aufbereitung kombiniert werden.

Die nach dem erfindungsgemäßen Verfahren zugänglichen Arylphosphonylverbindungen sind als Flammschutzmittel und Weichmacher einsetzbar. Arylphosphonsäurediarylester, insbesondere Benzolphosphonsäurediphenylester, sind zum Aufbau von Polymeren brauchbar.

Benzolphosphonsäurediphenylester ist ein hervorragend geeignetes Ausgangsmaterial für die Herstellung von Polyphosphonaten durch Schmelzumesterung mit Bisphenolen (US-PS 2 682 522, US-PS 3 578 731, jap. Patentanmeldung 78 033 992) oder mit aliphatischen Diolen (jap. Patentanmeldung 50 089 497). Wegen der bislang schlechten Zugänglichkeit des Benzolphosphonsäurediphenylesters ist in der Literatur allerdings zumeist die Synthese dieser als Weichmacher, Flammschutzmittel und als Werkstoff interessanten Polyphosphonate aus dem vor dieser Erfindung besser zugänglichen Benzolphosphonsäuredichlorid trotz der erheblichen technischen Nachteile — Chlorwasserstoff-Anfall, Korrosivität, Spaltung und Verschiebung und Umlagerung von Alkylgruppen und Alkylengruppen im Diol — beschrieben. Die aus Benzolphosphonsäurediphenylester gut zugänglichen Polyphosphonate sind als flammhemmende und weichmachende Zusätze zu nahezu allen Thermoplasten, z. B. Polyestern (DE-OS 2 639 745, DE-OS 2 553 208), Polysulfonen (jap. Patentanmeldung 017 008), Polyacrylnitril (FR-PS 2 201 311) und Viskose (jap. Patentanmeldung 40 075 821), Polyphenylenoxid, Polystyrol, aber auch zu Duromeren, z. B. Phenol-Formaldehyd-Harzen sowie als Flammschutzmittel für Baumwolle geeignet.

Das Verfahren der Erfindung wird durch die nachfolgenden Beispiele näher erläutert.

## Beispiel 1

5 g wäßrige Suspension von Raney-Nickel werden bei 120° C/16 mbar (12 mm Hg) 1,0 Stunden

getrocknet. Anschließend werden 124 g techn. Triphenylphosphit und 2,4 g Brombenzol zugesetzt. Diese Reaktionsmischung wird unter Rühren in einer Stickstoff-Atmosphäre 8,5 Stunden auf 320° C erhitzt.

Der Ansatz läßt sich praktisch quantitativ bei 240° C/3 mbar (2 mm Hg) destillieren.

Nach Gaschromatogramm setzt sich das Destillat wie folgt zusammen:

5,7% Phenol
90,6% Benzolphosphonsäurediphenylester
2,8% Triphenylphosphat

Gaschromatographisch ermittelte Zusammensetzung des technischen Triphenylphosphits:

3,2% Phenol
93,3% Triphenylphosphit
2,4% Triphenylphosphat

Beispiel 2

50 g wäßrige Suspension von Raney-Nickel werden bei 130° C/16 mbar (12 mm Hg) 1,3 Stunden getrocknet, wobei besonders sorgfältig auf die Entfernung von Kondenswasser-Tropfen aus allen Teilen des Glasgefäßes geachtet wird. Anschließend werden 1240 g Triphenylphosphit und 12 g Brombenzol hinzugesetzt und die ganze Mischung unter Rühren auf 320° C erhitzt. Ein zunächst auftretender Rückfluß wird mit der Zeit geringer. Nach 1 Stunde werden weitere 24 g Brombenzol im Lauf von 3 Stunden in die Reaktionsmischung eingetropft.

Nach insgesamt 4 Stunden Reaktionsdauer hat nach Gaschromatogramm die Mischung die Zusammensetzung:

0,6% Brombenzol
4,0% Phenol
0,3% Triphenylphosphat
94,0% Benzolphosphonsäurediphenylester

Beispiel 3

Wird die Versuchsführung nach Beispiel 2 bei 310—320° C wiederholt und dabei in stündlichen Anständen analysiert, so steigt im Verlauf von 4 Stunden der Gehalt an Benzolphosphonsäurediphenylester auf 65,1% nach 1 Stunde, auf 81,2%, dann auf 91,7% und endlich auf 93,1%, während der Triphenylphosphitgehalt von 26,8% auf 11,5%, auf 0,5% und endlich auf einen Wert unter der Nachweisbarkeitsgrenze fällt. Die Gehalte an Phenol und an Triphenylphosphat bleiben mit 4,6—5,0% bzw. 0,5—0,7% relativ konstant, ihr Anteil ist im wesentlichen durch die Verunreinigungen der Ausgangsmaterialien und auch durch den Restwassergehalt des Raney-Nickels bedingt. Ein Teil des mit dem Brombenzol eingebrachten Broms verläßt die Reaktionsmischung wieder in Form von Bromwasserstoff.

Beispiel 4

250 g wäßrige Suspension von Raney-Nickel werden bei 130° C/16 mbar (12 mm Hg) innerhalb 1,5 Stunden sorgfältig getrocknet. Sodann werden 6200 g Triphenylphosphit und 60 g Brombenzol hinzugefügt, die Mischung unter Rühren auf 310° C erhitzt und nach Erreichen dieser Temperatur im Verlauf von 2 Stunden weitere 120 g Brombenzol zugesetzt. Nach insgesamt 4 Stunden wird aus dem Reaktionsgefäß abdestilliert. Im Zuge einer groben Vortrennung wird das bis zu einer Kopftemperatur von 240° C bei einem Druck von ca. 3—7 mbar (2—5 mm Hg) übergehende Destillat als Vorlauf abgenommen, und der danach übergehende Anteil als Produkt in einer Menge von 5810 g erhalten. Seine gaschromatographisch ermittelte Zusammensetzung:

0,05% Brombenzol
0,25% Phenol
0,5% Triphenylphosphit
96,5% Benzolphosphonsäurediphenylester
0,6% Triphenylphosphat

Ein Teil dieses Produktes wird in üblicher Weise über eine kurze Füllkörperkolonne bei einem Rücklaufverhältnis 2 : 1 rektifiziert. Der Hauptlauf ist 99,3%iger Benzolphosphonsäurediphenylester.

Beispiel 5

Ein durch ca. einstündige Reaktion von techn. Triphenylphosphit mit Brombenzol und Raney-Nickel analog Beispiel 3 erzeugtes Reaktionsgemisch wird im Vakuum überdestilliert. Das Destillat, das 40,4% Triphenylphosphit, 6,2% Triphenylphosphat, 50,7% Benzolphosphonsäurediphenylester und 1,2% Phenol enthält, wird bei Raumtemperatur stehengelassen. Aus dem sich bildenden verfilzten Kristallbrei wird der nicht kristallisierte, flüssige Anteil nach 2 Tagen abgegossen und der Kristallbrei wird abtropfen gelassen. Der wieder aufgeschmolzene Kristallbrei besteht zu 83,0% aus Benzolphosphonsäurediphenylester. Erneute fraktionierte Kristallisation führt zu einem weiter gereinigten Produkt.

Vergleichsbeispiel A

5 g wäßrige Suspension von Raney-Nickel werden bei 120° C/16 mbar (12 mm Hg) getrocknet. Anschließend werden 124 g Triphenylphosphit und 2,4 g Jodbenzol zugesetzt. Diese Reaktionsmischung wird unter Rühren in einer Stickstoff-Atmosphäre 4 Stunden auf 320° C erhitzt.

Der Ansatz läßt sich praktisch quantitativ bei 240° C/3 mbar (2 mm Hg) destillieren.

Nach Gaschromatogramm setzt sich das Destillat wie folgt zusammen:

6,2% Phenol
47,2% Benzolphosphonsäurediphenylester
22,8% Triphenylphosphat
18,8% Triphenylphosphit

Vergleichsbeispiel B

5 g wäßrige Suspension von Raney-Nickel werden bei 120° C/16 mbar (12 mm Hg) getrocknet. Anschließend werden 124 g Triphenylphosphit und 2,4 g Chlorbenzol zugesetzt. Diese Reaktionsmischung wird unter Rühren in einer Stickstoff-Atmosphäre 8 Stunden auf 320° C erhitzt.

Der Ansatz läßt sich praktisch quantitativ bei 240° C/3 mbar (2 mm Hg) destillieren.

Nach Gaschromatogramm setzt sich das Destillat wie folgt zusammen:

2,9% Phenol
12,3% Benzolphosphonsäurediphenylester
10,1% Triphenylphosphat
72,2% Triphenylphosphit

Vergleichsbeispiel C

5 g wäßrige Suspension von Raney-Kobalt werden bei 120° C/16 mbar (12 mm Hg) getrocknet. Anschließend werden 124 g Triphenylphosphit und 2,4 g Brombenzol zugesetzt und diese gerührte Mischung wird in einer Stickstoff-Atmosphäre 4 Stunden auf 320° C erhitzt. Danach hat die Mischung die Zusammensetzung:

4,7% Phenol
10,4% Benzolphosphonsäurediphenylester
72,4% Triphenylphosphit
9,3% Triphenylphosphit

Vergleichsbeispiel D

Eine Mischung von 124 g Triphenylphosphit, 2,4 g Brombenzol und 3 g wasserfreiem Nickel-(II)-chlorid werden 8,5 Stunden auf 320° C erwärmt. Danach wird die Reaktionsmischung destilliert.

Das Destillat hat die Zusammensetzung:

3,6% Phenol
38,2% Benzolphosphonsäurediphenylester
44,7% Triphenylphosphit
11,4% Triphenylphosphat

Mit Nickelbromid statt Nickelchlorid wird ein noch geringerer Umwandlungsgrad erreicht.

Vergleichsbeispiel E

Wird in Vergleichsbeispiel D das Nickelchlorid durch Kupfer-(I)-chlorid oder Kupfer-(II)-chlorid ausgetauscht, dann werden bei gleicher Reaktionstemperatur und gleicher Reaktionsdauer nur Benzolphosphonsäurediphenylester-Gehalte von 1,1% bzw. 2,5% in der Reaktionsmischung erreicht.

Beispiel 6

124 g Triphenylphosphit, 4 g Brombenzol und 2 ml Nickeltetracarbonyl werden gemischt, auf 320° C erwärmt und 4 Stunden bei dieser Temperatur gehalten. Nach Gaschromatogramm enthält die Reaktionsmischung dann 92,2% Benzolphosphonsäurediphenylester, 0,3% Triphenylphosphat, 0,6% Triphenylphosphit.

Beispiel 7

124 g Triphenylphosphit und 5 g Brombenzol werden mit 30 ml einer Lösung von 15,5 mmol Nickel-tetrakistriphenylphosphit in Triphenylphosphit versetzt und vier Stunden lang auf 320° C erhitzt. Danach enthält das Reaktionsgemisch nach gaschromatographischer Analyse 93,3% Benzolphosphonsäurediphenylester.

Beispiel 8

141 g Tri-p-kresylphosphit, 2,5 ml Nickeltetracarbonyl und 5 g p-Bromtoluol werden gemischt, auf 320° C erwärmt und bei dieser Temperatur 1 Stunde gehalten. Dann enthält das Reaktionsgemisch 93,5% p-Methylbenzolphosponsäure-di-p-kresylester, 1,4% Trikresylphosphit und 4,5% Kresol.

Beispiel 9

141 g Tri-p-kresylphosphit, 2,5 ml Nickeltetracarbonyl und 4 g Brombenzol werden gemeinsam auf 320° C geheizt und bei dieser Temperatur 4 Stunden gehalten. Danach erhält das Reaktionsgemisch 79,3% p-Methylbenzolphosphonsäure-di-p-kresyl-ester und 5,1% Benzolphosphonsäure-di-kresylester.

Beispiel 10

191 g Tris-p-tert.-butylphenylphosphit, 2 ml Nickeltetracarbonyl und 4 g Brombenzol werden gemeinsam vorgelegt und langsam erwärmt. Nach Beendigung der Kohlenmonoxid-Entwicklung wird auf 320° C erwärmt und die Reaktionsmischung 4 Stunden bei dieser Temperatur gehalten. Nach Gaschromatogramm liegen danach 2,3% p-tert.-Butylphenol und 5,6% Tris-p-tert.-butylphenylphosphit neben 90,7% p-tert.-Butylbenzolphosphonsäure-di-p-tert.-butylphenylester vor.

Beispiel 11

5 g wäßrige Suspension von Raney-Nickel werden 1 Stunde bei 120° C/16 mbar 12 mm Hg getrocknet. Anschließend werden 165 g Tris-p-chlorphenylphosphit und 2,4 g Brombenzol zugefügt und diese Mischung wird unter Rühren auf 320° C erwärmt. Nach 4 Stunden sind nach gaschromatographischer Analyse noch 2,9% Tris-p-chlorphenylphosphit vorhanden. Benzolphosphonsäure-di-p-chlorphenylester und p-Chlorbenzolphosphonsäure-di-p-chlor-phenylester als Produkte stellen 5,4% bzw. 74,1% der Mischung dar.

**Patentansprüche**

1. Verfahren zur Herstellung von Arylphosphonyl-Verbindungen der allgemeinen Formel I

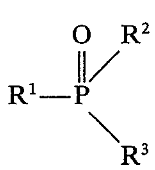

I

worin

$R^1$ für einen ein- oder mehrkernigen $C_6-C_{14}$-Arylrest, der durch Chlor, Fluor oder durch Alkyl-, Aryl-, Alkoxy-, Aryloxy-, Alkenyl- oder Cyan-Reste substituiert sein kann,
$R^2$ und $R^3$ unabhängig voneinander für einen Alkyl-, Alkenyl- oder Arylrest oder für einen Rest der Struktur $O-R^5$ unabhängig von $R^1$ die gleiche Bedeutung hat wie $R^1$, stehen

durch katalytische Umlagerung von Aryloxyphosphinen der allgemeinen Formel II

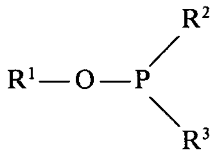

worin $R^1$, $R^2$ und $R^3$ die oben angegebene Bedeutung haben, dadurch gekennzeichnet, daß die Umlagerung in Gegenwart von Bromaromaten und von nullwertigem Nickel vorgenommen wird.

2. Verfahren nach Anspruch 1, dadurch gekennzeichnet, daß der eingesetzte Bromaromat die allgemeine Formel

$R^1-Br$

worin $R^1$ die oben genannte Bedeutung besitzt, aufweist.

3. Verfahren nach den Ansprüchen 1 und 2, dadurch gekennzeichnet, daß $R^2$ und $R^3$ identisch sind mit $-O-R^1$.

4. Verfahren nach den Ansprüchen 1 und 2, dadurch gekennzeichnet, daß Triphenylphosphit in Benzolphosphonsäurediphenylester umgelagert sind.

## Claims

1. Process for the preparation of aryl phosphony compounds of the general formula I

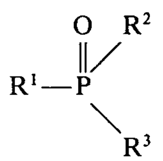

I

wherein

$R^1$ represents a mono- or polynuclear $C_6-C_{14}$ aryl radical which can be substituted by chlorine, fluorine or by alkyl, aryl, alkoxy, aryloxy, alkenyl or cyano radicals,
$R^2$ and $R^3$ independently of one another represent an alkyl, alkenyl or aryl radical or a radical of the structure $O-R^5$, independently of $R^1$, has the same meaning as $R^1$,

by the catalytic rearrangement of aryloxy phosphines of the general formula II

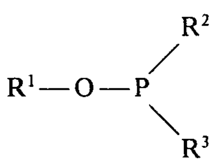

wherein $R^1$, $R^2$ and $R^3$ have the meaning indicated above, characterised in that the rearrangement is carried out in the presence of aromatic bromine compounds and zero-valent nickel.

2. Process according to Claim 1, characterised in that the aromatic bromine compound used has the general formula

$R^1-Br$

wherein $R^1$ has the abovementioned meaning.

3. Process according to Claim 1 and 2, characterised in that $R^2$ and $R^3$ are identical with $-O-R^1$.

4. Process according to Claims 1 and 2, characterised in that triphenyl phosphite is rearranged into benzene phosphonic acid diphenyl ester.

## Revendications

1. Procédé de préparation de composés arylphosphonyliques de formule générale I:

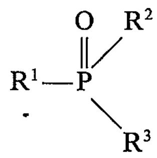

I

dans laquelle

$R^1$ représente un groupe aryle en $C_6-C_{14}$ à un ou plusieurs noyaux, qui peut être substitué par un atome de chlore, un atome de fluor, un groupe alkyle, un groupe aryle, un groupe alcoxy, un groupe aryloxy, un groupe alcényle ou par un groupe cyano,

$R^2$ et $R^3$ représentent chacun, indépendamment l'un de l'autre, un groupe alkyle, un groupe alcényle, un groupe aryle ou un radical de structure $-O-R^5$ où $R^5$ a, indépendamment de $R^1$, la même signification que ce dernier,

par transposition catalytique d'aryloxyphosphines de formule générale II

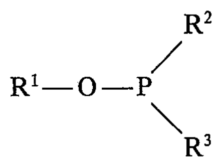

dans laquelle $R^1$, $R^2$ et $R^3$ ont les significations indiquées ci-dessus, caractérisé en ce qu'on effectue la transposition en présence d'hydrocarbures aromatiques bromés et de nickel zérovalent.

2. Procédé suivant la revendication 1, caractérisé en ce que l'hydrocarbure aromatique bromé utilisé répond à la formule générale:

$R^1-Br$

dans laquelle $R^1$ a la signification indiquée ci-dessus.

3. Procédé suivant les revendications 1 et 2, caractérisé en ce que $R^2$ et $R^3$ sont identiques à $-O-R^1$.

4. Procédé suivant les revendications 1 et 2, caractérisé en ce que le triphénylphosphite est transposé en ester diphénylique d'acide benzène-phosphonique.